# EUROPÄISCHE PATENTSCHRIFT

(11) **EP 1 155 316 B1**
(45) Veröffentlichungstag und Bekanntmachung des Hinweises auf die Patenterteilung: **11.04.2007**
(21) Anmeldenummer: 00916851.9
(22) Anmeldetag: 21.02.2000
(51) Int. Cl.: G01N 27/447, B01J 20/281

(54) **VERWENDUNG VON UMKEHRPHASEN-TRÄGERMATERIAL IN DER KAPILLAR- ELEKTROCHROMATOGRAPHIE**
USE OF SUPPORTING MATERIAL HAVING REVERSED PHASES IN CAPILLARY ELECTROCHROMATOGRAPHY
UTILISATION DE MATERIAU SUPPORT A PHASE RETROGRADE DANS L'ELECTROCHROMATOGRAPHIE CAPILLAIRE

(30) Priorität: 22.02.1999 DE 19907296
(43) Veröffentlichungstag der Anmeldung: 21.11.2001
(73) Patentinhaber: Merck Patent GmbH, 64293 Darmstadt (DE); Evotec AG, 22525 Hamburg (DE)
(72) Erfinder: UNGER, Klaus, D-64342 Seeheim (DE); BOOS, Karl-Siegfried, D-64271 Darmstadt (DE); LUBDA, Dieter, D-64271 Darmstadt (DE); MUSCATE-MAGNUSSEN, Angelika, D-22765 Hamburg (DE)
(74) Vertreter: Meyers, Hans-Wilhelm
(86) Internationale Anmeldenummer: PCT/EP2000/001391
(87) Internationale Veröffentlichungsnummer: WO 2000/050886

(56) Entgegenhaltungen:
- EP-A- 0 813 062
- US-A- 5 431 807
- US-A- 5 869 152
- NARANG P ET AL: "Sol-gel-derived fluorinated stationary phase for open tubular electrochromatography" JOURNAL OF CHROMATOGRAPHY A,NL,ELSEVIER SCIENCE, Bd. 773, Nr. 1-2, 27. Juni 1997 (1997-06-27), Seiten 65-72, XP004125493 ISSN: 0021-9673

## Beschreibung

Die Erfindung betrifft die Verwendung von Umkehrphasen-Trägermaterial in der Kapillar-Elektrochromatographie (CEC).

Im allgemeinen sind Analysenmethoden im günstigsten Fall selektiv; nur wenige, wenn überhaupt, sind jedoch wirklich spezifisch. Folglich ist im Rahmen einer Analyse die Abtrennung des Analyten von störenden Begleitsubstanzen unumgänglich.

In chromatographischen Trennungen wird die Probe in einer mobilen Phase gelöst, bei der es sich z.B. um ein Gas, eine Flüssigkeit oder ein überkritisches Fluid handeln kann. Die mobile Phase wird durch eine mit ihr nicht mischbare stationäre Phase bewegt, die sich z.B. in einer Säule befindet oder an einer festen Oberfläche fixiert ist. Die beiden Phasen werden so gewählt, dass sich die Probenkomponenten in verschiedenem Maße zwischen der mobilen und stationären Phase verteilen. Die Komponenten, die von der stationären Phase in starkem Maße zurückgehalten werden, bewegen sich nur langsam mit der mobilen Phase weiter. Demgegenüber bewegen sich die Komponenten, die nur schwach von der stationären Phase zurückgehalten werden, schnell. Aufgrund dieser Unterschiede trennen sich die Probenkomponenten in diskrete Banden auf.

Ein Chromatographiekonzept, das die Vorteile der Kapillarflüssigkeitschromatographie (z.B. HPLC) und der Kapillarelektrophorese (CE) verbindet, ist die sogenannte Kapillar-Elektrochromatographie (CEC). Im wesentlichen kann CEC als Hybrid aus HPLC und CE angesehen werden (Colon *et al.,* Analytical Chemistry News & Features 1995; August 1, 461A-467A). Wie in der HPLC werden die Komponenten einer Probe durch unterschiedliche Verteilung zwischen einer stationären und einer mobilen Phase aufgetrennt. Zusätzlich wird aber, wie in der CE, durch Anlegen einer elektrischen Spannung ein elektroosmotischer Fluss erzeugt. Die Trennungen können isokratisch oder mit einem Gradienten durchgeführt werden. Die Säulen sind bevorzugt mit Kieselgelpartikeln gefüllt, die typischerweise Partikeldurchmesser im Bereich von 1 bis 5 µm haben.

Der Vorteil dieser Methode ist die Möglichkeit der Trennung von anionischen, kationischen und neutralen Molekülen. Allerdings besteht ein großes Problem in der Analyse komplexer, insbesondere biologischer Proben. Diese, wie z.B. hämolysiertes Blut, Plasma, Serum, Milch, Speichel, Fermenterbrühe, Urin, Überstände von Zellkultur-, Lebensmittel- und Gewebehomogenaten oder Naturstoffextrakte, enthalten neben dem Analyten einen großen Anteil an Matrixkomponenten, wie Proteine und Salze.

Proteine und andere Makromoleküle werden z.B. durch hohe Anteile von organischen Lösungsmitteln in der mobilen Phase ausgefällt oder durch Restsilanolgruppen an der Oberfläche eines chromatographischen Trägers unspezifisch, irreversibel gebunden oder denaturiert. Sie blockieren bei Verwendung einer porösen stationären Phase den Zugang zu den Poren und verringern damit die Anzahl der chromatographischen Adsorptionszentren. Durch den damit verbundenen verringerten Stoffaustausch zwischen stationärer und mobiler Phase führen diese Vorgänge zu einem Kapazitäts- und Selektivitätsverlust der Säule. Nichtspezifische Adsorption führt darüber hinaus zu Schwankungen des elektroosmotischen Flusses und zu nicht reproduzierbaren Retentionszeiten der Analyten. In allen Fällen wird die CEC-Säule schwer geschädigt oder unbrauchbar gemacht. Daher ist es notwendig, diese Matrixkomponenten vor der CEC-Analyse aus der Probe zu entfernen.

Diese Problematik wiegt umso schwerer, da sie Bestimmungen betrifft, die in großer Anzahl durchgeführt werden: z.B. Therapiekontrolle, Bestimmung von körpereigenen Substanzen oder auch das Hochdurchsatzscreening nach potenziellen pharmakologischen Wirkstoffen, insbesondere unter Verwendung von Naturstoffextrakten.

Gängige Probenaufbereitungsverfahren sind z.B. Kartuschenverfahren oder die Verwendung von Vorsäulen, die vorzugsweise mit Kieselgelpartikeln gefüllt sind, wobei die Elution des Analyten bevorzugt durch Flüssigdesorption (HPLC) erfolgt. Allerdings sind die notwendigen Probenvorbehandlungsschritte oft zeit-, kosten- und arbeitsintensiv und führen durch den notwendigen Transfer des Analyten auf eine Trennsäule zu einer Volumenvergrößerung der Probe, die zu einem Verlust an Selektivität und Empfindlichkeit des Trennverfahrens führt.

Boos et al. (LC·GC 1997,15, 602-611; LC·GC 1996,14, 554-560) beschreiben ein Trägermaterial auf Alkyl-Diol-Silika-Basis (ADS), das quantitative Abtrennung von Proteinen und anderen makromolekularen Bestandteilen gewährleistet. Es zeichnet sich durch eine für Biomoleküle inerte Oberfläche aus und ist in den Poren mit Alkylgruppen belegt. Die Porengröße ermöglicht kleinen Zielmolekülen (Analyten) Zugang, während die großen Matrixmoleküle ausgeschlossen bleiben. Dieses Material wurde speziell für HPLC-Analysen entwickelt.

Die Verfahren der Kapillar-Elektrochromatographie und der HPLC unterscheiden sich insbesondere durch die in der CEC auftretenden elektroosmotischen Kräfte erheblich voneinander. Für die HPLC geeignete Materialien und Bedingungen sind somit nicht einfach auf das Verfahren der CEC zu übertragen (Colon et al. ,1997, Analytical Chemistry & Features, August 1).

Daher war es um so überraschender, dass die Verwendung von Trägermaterial für die Kapillar-Elektrochromatographie (CEC), wobei das Trägermaterial auf der Grundlage von hydroxylgruppenhaltigen Basismaterial auf die inneren Oberflächen von porösen Partikeln beschränkte Umkehrphasen aufweist, und dass diese Umkehrphasen aus Fettsäureresten bestehen, in der Kapillar-Elektrochromatographie eine im wesentlichen quantitative Abtrennung des Analyten von anderen Probenkomponenten, insbesondere Proteinen und anderen makromolekularen Bestandteilen (Probenmatrix) der Probe ermöglicht.

Gegenstand der Erfindung ist somit die Verwendung von Trägermaterial für die Kapillar-Elektrochromatographie, wobei das Trägermaterial auf der Grundlage von hydroxylgruppenhaltigen Basismaterial auf die inneren Oberflächen von porösen Partikeln beschränkte Umkehrphasen aufweist, und wobei diese Umkehrphasen aus Fettsäureresten bestehen.

Gegenstand der Erfindung ist außerdem eine Kapillare für die Kapillar-Elektrochromatographie gefüllt mit einem Trägermaterial, wobei das in der Kapillare befindliche Trägermaterial auf der Grundlage von hydroxylgruppenhaltigen Basismaterial auf die inneren Oberflächen von porösen Partikeln beschränkte Umkehrphasen aufweist und diese Umkehrphasen aus Fettsäureresten bestehen.

Die erfindungsgemäße Verwendung des Trägermaterials in der CEC ermöglicht es, den Analyten von anderen Komponenten der Probe zu trennen, ohne diesen zu verdünnen. Bei der erfindungsgemäßen Verwendung des Trägermaterials bleibt auch nach wiederholter Injektion komplexer Proben, insbesondere von serum- und zellkulturmedien-haltigen Proben, die Reproduzierbarkeit hinsichtlich Bodenzahlen, Retentionszeit und Auflösung der Säule erhalten.

Die erfindungsgemäße Verwendung des Trägermaterials erlaubt in einer weiteren Ausführungsform sogar die kombinierte Probenaufbereitung und -trennung von komplexen Proben auf einer einzigen CEC-Säule. Diese ist in Bezug auf Trennleistung, Empfindlichkeit, Signal-zu-Rausch-Verhältnis, Selektivität, Lebensdauer der Säule und Kosten der einer auf getrennten Säulen durchgeführten Probenaufbereitung und -trennung gleichgestellt oder sogar überlegen. Dies ermöglicht erstmals den Einsatz eines solchen Systems in Hochdurchsatz-Verfahren, wie z.B. dem Hochdurchsatzscreening nach potenziellen pharmakologisch aktiven Substanzen.

Die erfindungsgemäße Verwendung des Trägermaterials zeichnet sich somit insgesamt durch folgende Eigenschaften aus:
- es besteht die Möglichkeit der wiederholten direkten Injektion unbehandelter Proben, insbesondere biologischer Proben auf einer CEC-Säule,
- die Proteinmatrix wird quantitativ entfernt,
- der Analyt kann am oberen Rand der Säule aufkonzentriert und unabhängig von der Matrix quantitativ ab- und aufgetrennt werden,
- hohe Trennleistung, Empfindlichkeit, Genauigkeit, sehr gutes Signal-zu-Rausch-Verhältnis,
- hohes Maß an Reproduzierbarkeit hinsichtlich Bodenzahlen, Retentionszeit und Auflösung der Trennung in der Säule,
- automatischer Betrieb möglich,
- hohe Anzahl an Analysendurchgängen, kontinuierlicher Betrieb der Säule,
- geringe Kosten pro Analyse.

Vorteilhaft ist die erfindungsgemäße Verwendung in einem CEC-Verfahren zur Probenaufbereitung, wobei die Probe, bestehend aus Analyt und anderen Probenkomponenten,
- auf ein CEC-Säulensystem aufgebracht wird,
- durch Anlegen einer elektrischen Spannung ein elektroosmotischer Fluss erzeugt wird, durch den die Probenmoleküle bewegt werden und/oder die Probenmoleküle aufgrund ihres Ladung-zu-Masse-Verhältnisses migrieren,
- die Probenmatrix durch Aufbringen eines Waschpuffers eluiert wird,
- der Analyt durch Aufbringen eines Transferpuffers eluiert wird.

Besonders bevorzugt ist die erfindungsgemäße Verwendung in einem CEC-Verfahren zur kombinierten Probenaufbereitung und Trennung, wobei die Probe, bestehend aus Analyt und anderen Probenkomponenten,
- auf ein CEC-Säulensystem aufgebracht wird,
- durch Anlegen einer elektrischen Spannung ein elektroosmotischer Fluss erzeugt wird, durch den die Probenmoleküle bewegt werden und/oder die Probenmoleküle aufgrund ihres Ladung-zu-Masse-Verhältnisses migrieren,
- die Probenmatrix durch Aufbringen eines Waschpuffers eluiert wird,
- der Analyt durch Aufbringen eines Elutionspuffers aufgetrennt und eluiert wird.

Das erfindungsgemäße Verfahren erlaubt nicht nur die Probenmatrix abzutrennen, sondern auch den Analyten aufzukonzentrieren; experimentelle Einzelheiten sind in Beispiel 6 offenbart. Unter Verwendung dieser Variante der vorliegenden Erfindung wird eine Aufkonzentration des Analyten um einen Faktor zwischen 10 und 1000 erreicht.

Zur genauen Charakterisierung der Zusammensetzung des Analyten sowohl qualitativ als auch quantitativ ist es in einer bevorzugten Ausführungsform möglich, im Anschluss an Trennung und/oder Elution verschiedene spektrometrische und spektroskopische Analysenverfahren durchzuführen. So wird z.B. im Ausführungsbeispiel 1 die UV-Detektion eingesetzt.

Es kann aber ebenfalls bevorzugt sein, die Analytfraktionen im Anschluss an die Trennung einem weiteren Säulensystem zur weiteren Trennung zuzuführen.

CEC-Vorrichtungen, die für die erfindungsgemäße Verwendung geeignet sind, sind dem Fachmann bekannt; gleiches gilt für periphere Einrichtungen, wie z.B. Spannungsversorgungsvorrichtungen, Thermostasiereinrichtungen, Detektionsvorrichtungen, Trennkapillaren.

Für die CEC benutzte Trennkapillaren weisen typischerweise Innendurchmesser zwischen 20 und 300 µm auf, wobei die Untergrenze durch die Handhabbarkeit, die Obergrenze durch die Möglichkeit begrenzt wird, die durch den Stromfluß entstehende joulesche Wärme abzuleiten. Die Länge derartiger Kapillaren beträgt üblicherweise wenige Zentimeter bis zu ca. 50 cm, wobei die Obergrenze wiederum durch die Handhabbarkeit und auch durch die resultierende Analysenzeit begrenzt ist, da bei der Kapillarelektrochromatografie der lineare Fluß begrenzt ist. Die zur Füllung der Trennkapillaren üblichen partikulären Trägermaterialien weisen typischerweise Außendurchmesser von weniger als 20 µm, insbesondere von 1 bis 5 µm auf. Das Sorbensbett wird üblicherweise beidseitig durch Fritten begrenzt, wobei die Fritten auch durch Ansintern von Sorbenspartikeln erzeugt werden können.

Die erfindungsgemäß verwendeten Trennmaterialien, die auf den inneren Oberflächen von porösen Partikeln beschränkte Umkehrphasen aufweisen, und deren Umkehrphasen aus Fettsäureresten bestehen, besitzen Mesoporen, deren Weite typischerweise im Bereich von 2 bis 50 nm liegt, wie es für die Trennung von niedermolekularen Analyten üblich ist. Die Fettsäurereste besitzen in Abhängigkeit vom gewünschten Grad an Lipophilie 2 bis 24 Kohlenstoffatome. Als Basisträger sind hydroxylgruppenhaltige Materialien wie Silicagel, poröses Glas oder organische Polymere geeignet. Die Herstellung derartiger Trennmaterialien ist in DE 41 30 475 und EP 0 537 461 offenbart.

Weitere Ausführungsformen der Vorrichtung werden im folgenden unter Bezug auf die beigefügten Abbildungen erläutert.
Abbildung 1 zeigt ein CEC-Säulensystem, das aus einer einzelnen Säule zur Probenaufbereitung und/oder Trennung besteht.
Abbildung 2 zeigt das Elektropherogramm von Digitoxigenin.
Abbildung 3 zeigt das Elektropherogramm von Digitoxigenin.
Abbildung 4 zeigt das Elektropherogramm von Nadolol.
Abbildung 5 zeigt das Elektropherogramm von Benzocain.
Abbildung 6 zeigt das Elektropherogramm von Hydrocortison.
Abbildung 7 zeigt das Elektropherogramm von Diphenylsulfon.
Abbildung 8 zeigt das Elektropherogramm von Diphenylsulfon mit einer Aufkonzentrierung des Analyten um den Faktor 10.

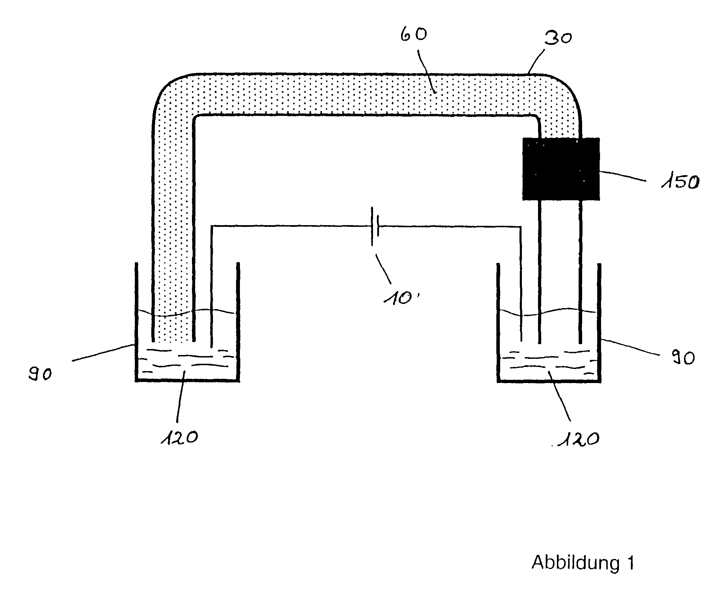

Eine besonders vorteilhafte Ausführungsform der Vorrichtung ist in Abbildung 1 dargestellt. Eine CEC-Säule (30), die mit erfindungsgemäßem Trägermaterial (60) gepackt ist, taucht mit beiden Enden in Behälter (90) mit mobiler Phase (120) ein. Die Spannungsquelle (10) dient zum Anlegen einer Spannung zwischen beiden Enden der Säulen. Die Spannung ermöglicht die Ausbildung eines elektroosmotischen Flusses in der Säule. Zusätzlich kann noch eine Vorrichtung zur Beaufschlagung der Behälter mit Druck angebracht werden. Das Anlegen von Druck gleichmäßig an beiden Säulenenden wirkt einer Ausgasung der Pufferlösungen und somit der Bildung von Luftblasen in der Säule entgegen. Ein Säulenende ist zur Aufnahme der Probe ausgebildet. Eine Wechselvorrichtung ermöglicht das Wechseln der Behälter (90) und somit den Austausch bzw. die Anpassung der Pufferlösungen (120) an den Verfahrensschritt. Durch Anbringen beispielsweise, wie in Abbildung 1 skizziert, eines Detektors (150) direkt auf der Säule kann der Analyt direkt detektiert und analysiert werden.

In einer weiteren Ausführungsform der Vorrichtung ist es bevorzugt, dass das Säulensystem aus mindestens einer CEC-Säule zur Probenaufbereitung und mindestens einer CEC-Säule zur Trennung des Analyten besteht, die miteinander über ein Kapillarsystem verbunden sind, wobei dieses Kapillarsystem in einer besonders bevorzugten Ausführungsform mindestens einen Auslass aufweist, über den die Probenmatrix entfernt werden kann. Darüber hinaus ist es ebenfalls möglich, eine CEC-Säule (30) nur zur Probenaufbereitung zu verwenden. Es ist auch möglich, den Analyten nach Abtrennung der Probenmatrix auf andere Analyse- bzw. Trennsysteme zu überführen.

Die Vorrichtung kann ebenfalls eine Kopplung des Säulensystems an mindestens einen Detektor, insbesondere Massenspektrometer und/oder Lichtstreudetektor oder sonstigen optischen Detektor und/oder elektrochemischen Detektor (150), vorsehen.

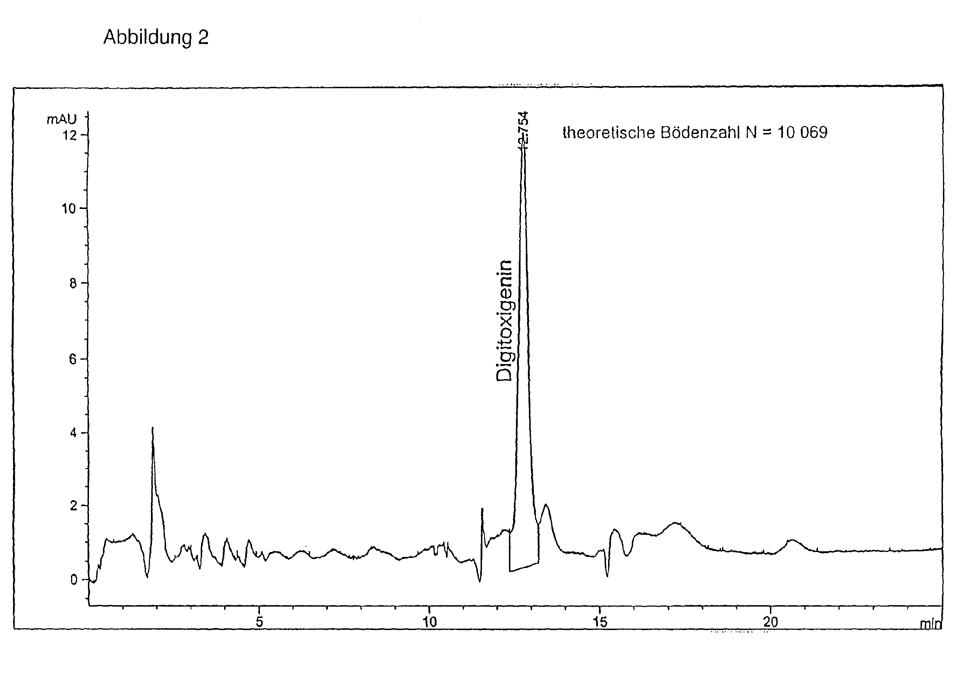

Abbildung 2 zeigt das Elektropherogramm von Digitoxigenin. Die Durchführung erfolgte mit einer CEC-Säule, gefüllt mit 5 µm LiChrospher^{®} ADS-C18 Teilchen (Porengröße 6 nm). Länge der gepackten Kapillare: 8,3 cm. Innendurchmesser: 100 µm. Detektionswellenlänge: 210 nm. Weitere Bedingungen siehe Ausführungsbeispiel 1.

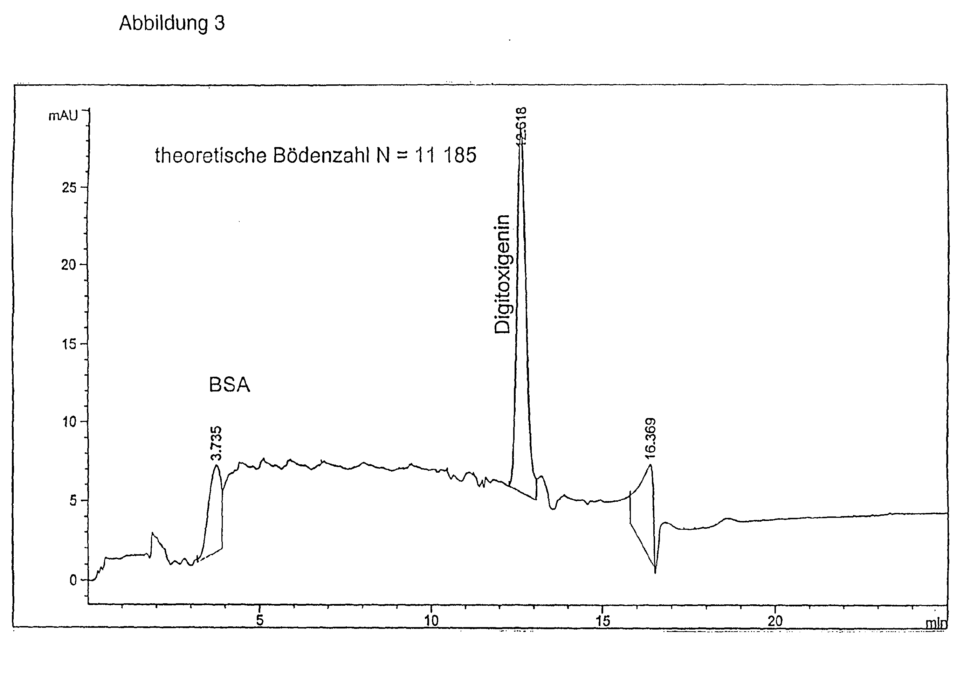

Abbildung 3 zeigt das Elektropherogramm von Digitoxigenin, welches durch Anwendung erfindungsgemäßen Einsatz der Trägermaterialien von BSA (Rinderserumalbumin) getrennt wurde. Die Durchführung erfolgte mit einer CEC-Säule, gefüllt mit 5 µm LiChrospher^{®} ADS-C18 Teilchen (Porengröße 6 nm). Länge der gepackten Kapillare: 8,3 cm. Innendurchmesser: 100 µm. Detektionswellenlänge: 210 nm. Weitere Bedingungen siehe Ausführungsbeispiel 1.

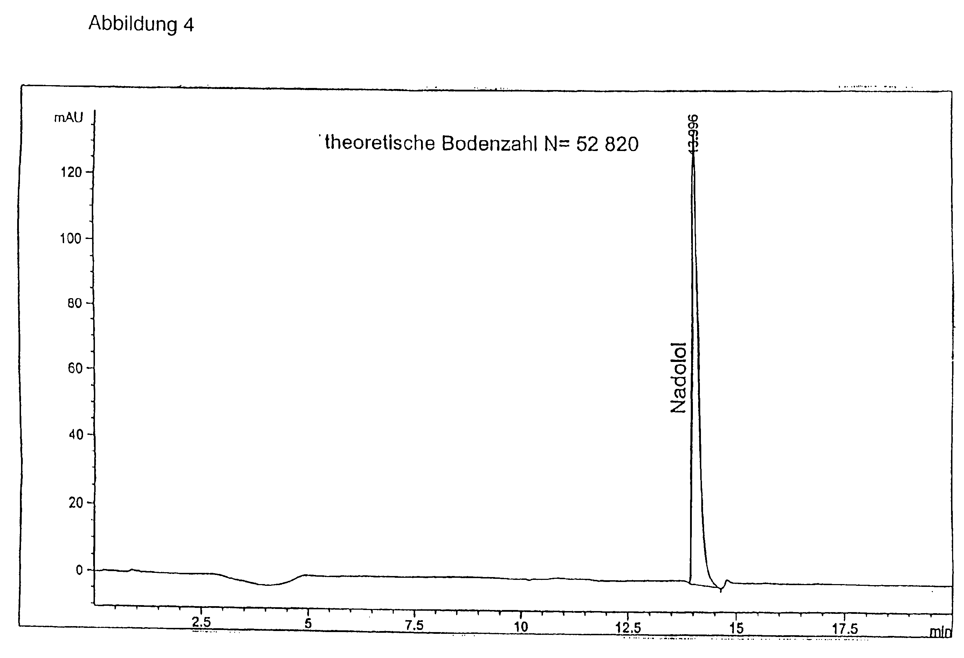

Abbildung 4 zeigt das Elektropherogramm von Nadolol. Die Durchführung erfolgte mit einer CEC-Säule, gefüllt mit 5 µm LiChrospher^{®} ADS-C18 Teilchen (Porengröße 6 nm). Länge der gepackten Kapillare: 8,3 cm. Innendurchmesser 100 µm. Detektionswellenlänge: 210 nm. Weitere Bedingungen siehe Ausführungsbeispiel 2.

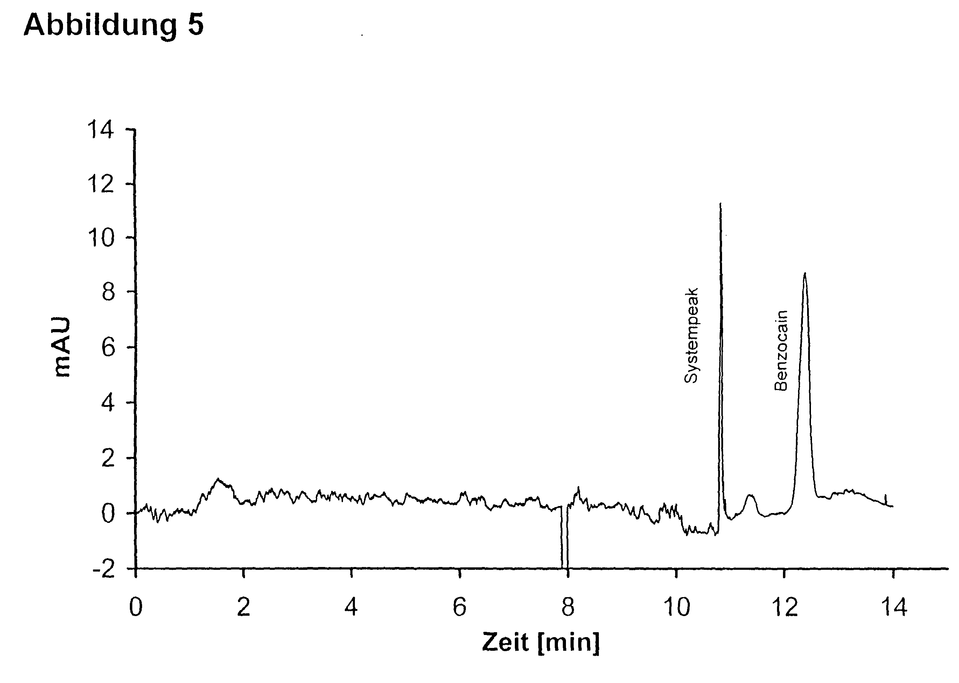

Abbildung 5 zeigt das Elektropherogramm von Benzocain. Die Durchführung erfolgte mit einer CEC-Säule, gefüllt mit 2 µm LiChrospher^{®} ADS-C18 Teilchen (Porengröße 6 nm). Länge der gepackten Kapillare: 8,3 cm. Innendurchmesser: 100 µm. Detektionswellenlänge: 210 nm. Weitere Bedingungen siehe Ausführungsbeispiel 3.

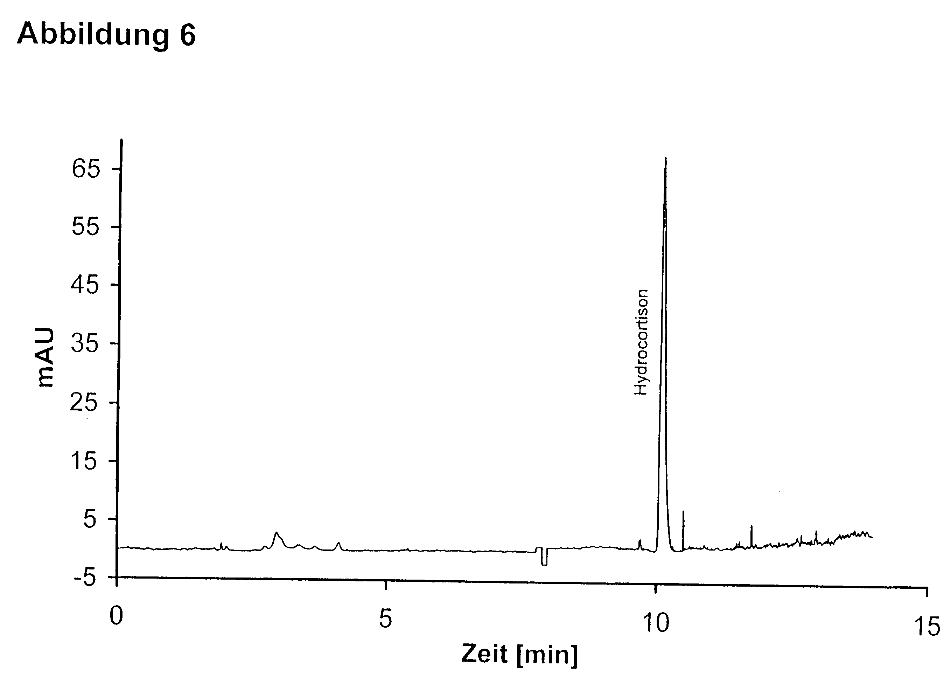

Abbildung 6 zeigt das Elektropherogramm von Hydrocortison. Die Durchführung erfolgte mit einer CEC-Säule, gefüllt mit 2 µm LiChrospher^{®} ADS-C18 Teilchen (Porengröße 6 nm). Länge der gepackten Kapillare: 8,3 cm. Innendurchmesser: 100 µm. Detektionswellenlänge: 240 nm. Weitere Bedingungen siehe Ausführungsbeispiel 1.

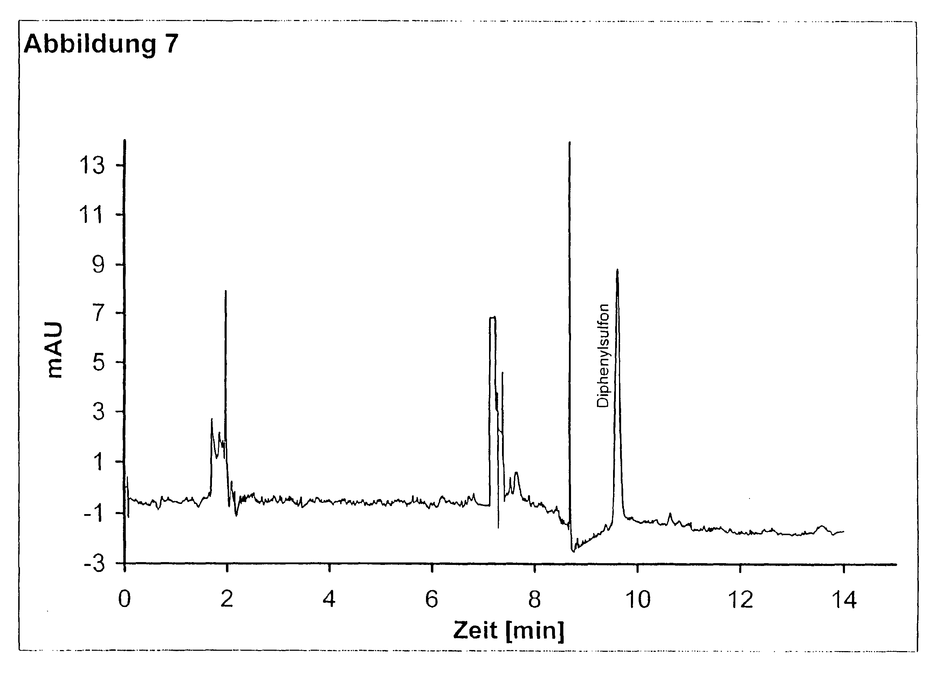

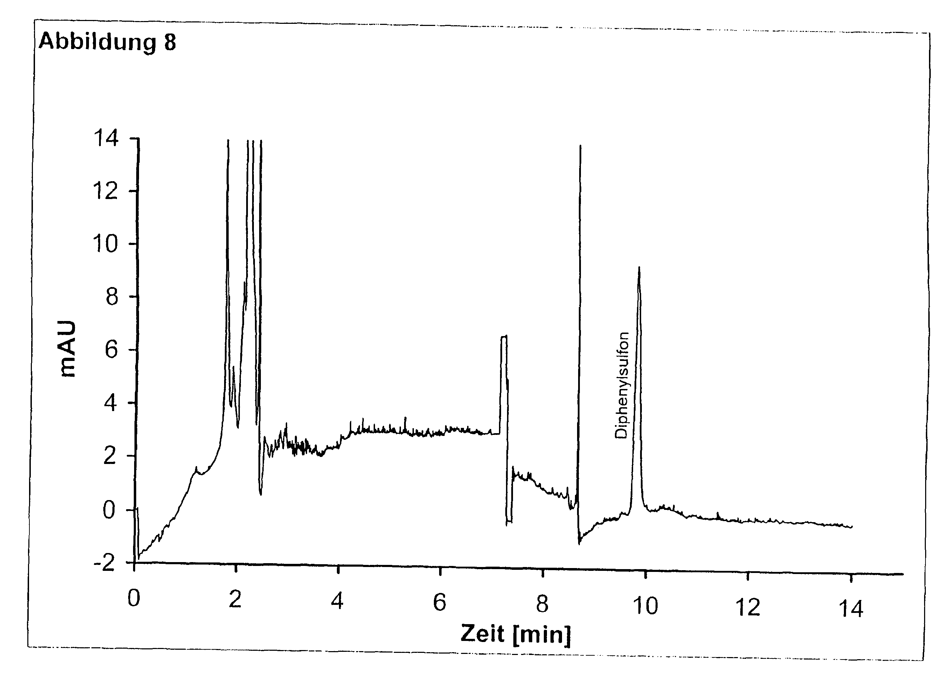

Abbildung 7 zeigt das Elektropherogramm von Diphenylsulfon als Kontrolle zum Aufkonzentrierungsversuch in Abbildung 8. Die Durchführung erfolgte mit einer CEC-Säule, gefüllt mit 2 µm LiChrosper^{®} ADS-C18 Teilchen (Porengröße 6 nm). Länge der gepackten Kapillare: 8,3 cm. Innendurchmesser: 100 µm. Detektionswellenlänge: 210 nm. Weitere Bedingungen siehe Ausführungsbeispiel 5.

Abbildung 8 zeigt das Elektropherogramm von Diphenylsulfon mit einer Aufkonzentrierung des Analyten um den Faktor 10. Die Durchführung erfolgte mit einer CEC-Säule, gefüllt mit 2 µm LiChrosper^{®} ADS-C18 Teilchen (Porengröße 6 nm). Länge der gepackten Kapillare: 8,3 cm. Innendurchmesser: 100 µm. Detektionswellenlänge: 210 nm. Weitere Bedingungen siehe Ausführungsbeispiel 6.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Außerdem bezieht sich die korrespondierende Anmeldung DE 199 07 296.5, eingereicht am 22.02.1999, auf Trägermaterialien, die auf der Grundlage von hydroxylgruppenhaltigen Basismaterial auf die inneren Oberflächen von porösen Partikeln beschränkte Umkehrphasen aufweisen, und wobei diese Umkehrphasen aus Fettsäureresten bestehen.

### Ausführungsbeispiel 1:

### Trennung von Digitoxigenin in Gegenwart und Abwesenheit von BSA

### Verwendete Materialien:

Die CEC-Säule mit einer Länge von 8.3 cm und einem Innendurchmesser von 100 µm wurde mit LiChrospher^{®} ADS-C18 der Firma Merck Darmstadt gepackt. Die verwendeten Partikel hatten einen Durchmesser von 5 µm und eine Porengröße von 6 nm.

Die Korngrößenbestimmung wurde mit dem Malvern Mastersizer durchgeführt. Die Messung des Porendurchmessers erfolgte mit dem Micometrics ASAP 2400 Gerät. Der Porendurchmesser wurde durch Bestimmung der Desorption oder Adsorption erhalten.

Der Waschpuffer bestand aus 5% Acetonitril, 95% Wasser, 5 mM Ammoniumacetat.

Der Elutionspuffer bestand aus 60% Acetonitril, 40% Wasser, 5 mM Ammoniumacetat.

Die Kontrollösung enthielt Digitoxigenin (Sigma, Deisenhofen) in einer Konzentration von 0.3 mg/ml in H₂O.

Die Probenlösung enthielt 1 mg/ml Digitoxigenin und 4 mg/ml BSA (Rinderserumalbumin, Sigma Deisenhofen) in H₂O.

### Vorrichtung

Zur Durchführung der Trennung von Digitoxigenin wurde die in Abbildung 1 dargestellte Vorrichtung eingesetzt. Die mit LiChrospher^{®} ADS-C18 gepackte Säule tauchte mit je einem Ende in Behälter zur Aufnahme von Pufferlösung ein. Mit Hilfe einer Spannungsquelle (10) wurde eine Spannung zwischen beiden Enden der Säule angelegt.

### Säulenvorbereitung

Die Säulenvorbereitung wurde bei 15°C in 2 Stufen durchgeführt:
1. Die CEC-Säule wurde zunächst 40 min mit Waschpuffer äquilibriert. Während dieses Vorganges wurde eine Spannung von -5 kV angelegt und zur Verhinderung der Luftblasenbildung wurden beide Behälter mit einem Druck von 10 bar beaufschlagt. Die Stabilität der Säule wurde währenddessen durch Messung des Stroms und der UV-Absorption (bei 210 nm) kontrolliert.
2. Die 2. Äquilibrierungsphase dauerte 15 min, wobei eine Spannung von -15 kV und ein Druck von 10 bar angelegt wurden. Der Strom und die UV-Absorption wurden ebenfalls kontrolliert.

Nach Abschluss der 2. Phase waren der Strom und die UV-Absorption stabil.

### Trennungen

Während des gesamten Betriebes wurden die Puffer, die Proben und die Trennkapillare auf 15 °C temperiert.

### Digitoxigenin

Die Probe (Digitoxigenin 0.3 mg/ml in H₂O) wurde elektrokinetisch durch Anlegen einer Spannung von -5 kV über 3 sec auf die Säule geladen. Im Anschluss daran wurde zur Verhinderung einer möglichen Diffusion der Probe in das Puffergefäß eine geringe Menge Waschpuffer, ein sog. Pufferplug, unter denselben Bedingungen auf die Säule geladen.

Anschließend wurde die Probe durch Aufbringen des Waschpuffers bei einer Spannung von -15 kV und unter Anlegen eines Druckes auf beide Enden der Säule von 10 bar gewaschen. Nach 9.5 Minuten wurde der Waschpuffer durch einen Elutionspuffer ersetzt. Die Bedingungen -15 kV und 10 bar wurden beibehalten. Digitoxigenin wurde nach 12.7 min eluiert. Das Elektropherogramm dieser Trennung ist in Abbildung 2 dargestellt.

### Digitoxigenin in Anwesenheit von BSA

Die Probe (1 mg/ml Digitoxigenin und 4 mg/ml BSA jeweils in H₂O) wurde elektrokinetisch durch Anlegen einer Spannung von -5 kV über 3 sec auf die Säule geladen. Im Anschluss daran wurde zur Verhinderung einer möglichen Diffusion der Probe in das Puffergefäß eine geringe Menge Waschpuffer, ein sog. Pufferplug, unter denselben Bedingungen auf die Säule geladen.

Durch Aufbringen des Waschpuffers wird anschließend die Probe bei einer Spannung von -15 kV und unter Anlegen eines Druckes auf beiden Enden der Säule von 10 bar gewaschen und somit das BSA entfernt. Nach 10 Minuten wurde der Waschpuffer gegen einen Elutionspuffer ersetzt. Die Bedingungen -15 kV und 10 bar wurden beibehalten. Digitoxigenin wurde nach 12.6 min eluiert. Das Elektropherogramm dieser Trennung ist in Abbildung 3 dargestellt.

### Ausführungsbeispiel 2:

### Trennung von Nadolol

### Verwendete Materialien:

Die CEC-Säule mit einer Länge von 8.3 cm und einem Innendurchmesser von 100 µm wurde mit LiChrospher^{®} ADS-C18 der Firma Merck Darmstadt gepackt. Die verwendeten Partikel hatten einen Durchmesser von 5 µm und eine Porengröße von 6 nm.

Die Korngrößenbestimmung wurde mit dem Malvern Mastersizer durchgeführt. Die Messung des Porendurchmessers erfolgte mit dem Micometrics ASAP 2400 Gerät. Der Porendurchmesser wurde durch Bestimmung der Desorption oder Adsorption erhalten.

Der Waschpuffer bestand aus 5% Acetonitril, 95% Wasser, 10 mM Ammoniumacetat.

Der Elutionspuffer bestand aus 60% Acetonitril, 40% Wasser, 10 mM Ammoniumacetat.

Die Lösung enthielt Nadolol (Sigma, Deisenhofen) in einer Konzentration von 0.3 mg/ml in H₂O.

### Vorrichtung

Die Vorrichtung entsprach der aus Ausführungsbeispiel 1.

### Säulenvorbereitung

Die Säulenvorbereitung wurde gemäß Ausführungsbeispiel 1 durchgeführt.

### Trennung

Während des gesamten Betriebes wurden die Puffer, die Proben und die Trennkapillare auf 15°C temperiert.

Nadolol (1 mg/ml) wurde elektrokinetisch unter Anlegen einer Spannung von -5 kV für 3 sec geladen. Im Anschluss daran wurde zur Verhinderung einer möglichen Diffusion der Probe in das Puffergefäß eine geringe Menge Waschpuffer, ein sog. Pufferplug, unter denselben Bedingungen auf die Säule geladen.

Durch Aufbringen des Waschpuffers wird anschließend die Probe bei einer Spannung von -15 kV und unter Anlegen eines Druckes auf beiden Enden der Säule von 10 bar gewaschen und somit das BSA entfernt. Nach 10 Minuten wurde der Waschpuffer gegen einen Elutionspuffer ersetzt. Die Bedingungen -15 kV und 10 bar wurden beibehalten. Nadolol wird nach 13,99 min eluiert. Das Elektropherogramm dieser Trennung ist in Abbildung 4 dargestellt.

### Ausführungsbeispiel 3:

### Trennung von Benzocain in Humanplasma

### Verwendete Materialien

Die CEC-Säule mit einer Länge von 8.3 cm und einem Innendurchmesser von 100 µm wurde mit LiChrospher^{®} ADS C18-Teilchen gepackt. Die verwendeten Partikel hatten einen Durchmesser von 2 µm und eine Porengröße von 6 nm.

Die Korngrößenbestimmung wurde mit dem Malvern Mastersizer durchgeführt. Die Messung des Porendurchmessers erfolgte mit dem Micometrics ASAP 2400 Gerät. Der Porendurchmesser wurde durch Bestimmung der Desorption oder Adsorption erhalten.

Der Waschpuffer bestand aus 5% Acetonitril, 95% Wasser, 5 mM Ammoniumacetat, pH 4,7. Der Elutionspuffer bestand aus 60% Acetonitril, 40% Wasser, 5 mM Ammoniumacetat, pH 4,7.

Die Probenlösung bestand aus Humanplasma dotiert mit 0,5 mg/ml Benzocain.

### Vorrichtung

Die Vorrichtung entsprach der aus Ausführungsbeispiel 1.

### Säulenvorbereitung

Die Säulenvorbereitung wurde bei 15°C in 2 Stufen durchgeführt:
1. Die Säule wurde zunächst mit Trennpuffer äquilibriert. Während dieses Vorgangs fand im Abstand von 5 min jeweils eine stufenweise Erhöhung der Spannung in 5 kV Schritten von -5 kV auf -20 kV statt. Dabei war der Inletpufferbehälter mit einem Druck von 5 bar beaufschlagt. Dann wurden beide Puffergefäße mit 10 bar Druck beaufschlagt und eine Spannung von -15 kV angelegt. Die Stabilität der Säule wurde währenddessen durch Messung des Stroms und der UV-Absorption (210 nm) kontrolliert.
2. Die 2. Äquilibrierungsphase erfolgte in Waschpuffer und dauerte 12 min. Dabei wurde eine Spannung von -15 kV und an beiden Pufferbehältern ein Druck von 10 bar angelegt. Der Strom und die Spannung wurden ebenfalls kontrolliert.

Nach Abschluss der 2. Phase waren der Strom und die UV-Absorption stabil.

### Trennungen

Während des gesamten Betriebes wurden die Puffer, die Proben und die Trennkapillare auf 15°C temperiert.

Die Probe wurde elektrokinetisch durch Anlegen einer Spannung von - 5kV über 3 sec auf die Säule geladen. Im Anschluß daran wurde zur Verhinderung einer möglichen Diffusion der Probe in das Puffergefäß eine geringe Menge Waschpuffer, ein sogenannter Pufferplug, unter denselben Bedingungen auf die Säule geladen.

Anschließend wurde die Probe durch das Aufbringen des Waschpuffers bei einer Spannung von -15 kV und unter Anlegen eines Druckes auf beide Enden der Säule von 10 bar gewaschen. Dabei wurden die Proteine und Salze aus der Modellmatrix entfernt. Nach 7,7 min wurde der Waschpuffer durch einen Elutionspuffer ersetzt. Die Bedingungen -15 kV und 10 bar wurden beibehalten. Das Benzocain eluierte bei 12,37 min. Das Elektropherogramm ist in Abbildung 5 dargestellt.

### Ausführungsbeispiel 4:

### Trennung von Hydrocortison in Humanserum

### Verwendete Materialien

Die CEC-Säule mit einer Länge von 8.3 cm und einem Innendurchmesser von 100 µm wurde mit LiChrospher^{®} ADS C18-Teilchen gepackt. Die verwendeten Partikel hatten einen Durchmesser von 2 µm und eine Porengröße von 6 nm.

Die Korngrößenbestimmung wurde mit dem Malvern Mastersizer durchgeführt. Die Messung des Porendurchmessers erfolgte mit dem Micometrics ASAP 2400 Gerät. Der Porendurchmesser wurde durch Bestimmung der Desorption oder Adsorption erhalten.

Der Waschpuffer bestand aus 5% Acetonitril, 95% Wasser, 5 mM Ammoniumacetat pH 4,7. Der Elutionspuffer bestand aus 60% Acetonitril, 40 % Wasser, 5 mM Ammoniumacetat, pH 4,7.

Die Probenlösung bestand aus Humanserum dotiert mit 0,5 mg/ml Hydrocortison.

### Vorrichtung

Die Vorrichtung entsprach der aus Ausführungsbeispiel 1.

### Säulenvorbereitung

Die Säulenvorbereitung erfolgte wie in Ausführungsbeispiel 3

### Trennungen

Die Trennung erfolgte wie in Anwendungsbeispiel 3 beschrieben.

Das Hydrocortison eluierte bei 10,10 min. Das Elektropherogramm ist in Abbildung. 6 dargestellt.

### Ausführungsbeispiel 5:

### Trennung von Diphenylsulfon in serumhaltiger Salzlösung

### Verwendete Materialien:

Die CEC-Säule mit einer Länge von 8.3 cm und einem Innendurchmesser von 100 µm wurde mit LiChrospher^{®} ADS-C18 Teilchen gepackt. Die verwendeten Partikel hatten einen Durchmesser von 2 µm und eine Porengröße von 6 nm.

Die Korngrößenbestimmung wurde mit dem Malvern Mastersizer durchgeführt. Die Messung des Porendurchmessers erfolgte mit dem Micometrics ASAP 2400 Gerät. Der Porendurchmesser wurde durch Bestimmung der Desorption oder Adsorption erhalten.

Der Waschpuffer bestand aus 5% Acetonitril, 95% Wasser, 5 mM Ammoniumacetat pH 4,7. Der Elutionspuffer bestand aus 60% Acetonitril, 40% Wasser, 5 mM Ammoniumacetat, pH 4,7.

Die Probenlösung bestand aus 0,1 mg/ml Diphenylsulfon in 250 µl/ml Fötales Kälberserum in Hanks Balanced Salt Solution.

### Vorrichtung

Die Vorrichtung entsprach der aus Ausführungsbeispiel 1.

### Säulenvorbereitung

Die Säulenvorbereitung wurde gemäß Ausführungsbeispiel 3 durchgeführt.

### Trennungen

Während des gesamten Betriebes wurden die Puffer, die Proben und die Trennkapillare auf 15°C temperiert.

Die Probe wurde elektrokinetisch durch Anlegen einer Spannung von -5 kV über 3 s auf die Säule geladen. Im Anschluß daran wurde zur Verhinderung einer möglichen Diffusion der Probe in das Puffergefäß eine geringe Menge Waschpuffer, ein sogenannter Pufferplug, unter denselben Bedingungen auf die Säule geladen.

Anschließend wurde die Probe durch das Aufbringen des Waschpuffers bei einer Spannung von -15 kV und unter Anlegen eines Druckes auf beide Enden der Säule von 10 bar gewaschen. Dabei wurden die Proteine und Salze aus der Modellmatrix entfernt. Nach 7,7 min wurde der Waschpuffer durch einen Elutionspuffer ersetzt. Die Bedingungen -15 kV und 10 bar wurden beibehalten. Das Diphenylsulfon eluierte bei 9,610 min und hatte eine Peakfläche von 85,5 mAU*s. Das Elektropherogramm dieser Trennung ist in Abbildung 7 dargestellt.

### Ausführungsbeispiel 6:

### Zehnfache Aufkonzentrierung und anschließende Trennung von Diphenylsulfon in serumhaltiger Salzlösung

### Verwendete Materialien:

Die CEC-Säule mit einer Länge von 8.3 cm und einem Innendurchmesser von 100 µm wurde mit LiChrospher^{®} ADS-C18 Teilchen gepackt. Die verwendeten Partikel hatten einen Durchmesser von 2µm und eine Porengröße von 6 nm.

Die Korngrößenbestimmung wurde mit dem Malvern Mastersizer durchgeführt. Die Messung des Porendurchmessers erfolgte mit dem Micometrics ASAP 2400 Gerät. Der Porendurchmesser wurde durch Bestimmung der Desorption oder Adsorption erhalten.

Der Waschpuffer bestand aus 5% Acetonitril, 95% Wasser, 5 mM Ammoniumacetat pH 4,7. Der Elutionspuffer bestand aus 60% Acetonitril, 40% Wasser, 5 mM Ammoniumacetat, pH 4,7.

Die Probenlösung bestand aus 0,01 mg/ml Diphenylsulfon in 250 µl/ml Fötales Kälberserum in Hanks Balanced Salt Solution.

### Vorrichtung

Die Vorrichtung entsprach der aus Ausführungsbeispiel 1.

### Säulenvorbereitung

Die Säulenvorbereitung wurde gemäß Ausführungsbeispiel 3 durchgeführt.

### Trennungen

Während des gesamten Betriebes wurden die Puffer, die Proben und die Trennkapillare auf 15°C temperiert.

Die Probe wurde elektrokinetisch durch Anlegen einer Spannung von - 5kV über 30 sec auf der Säule aufkonzentriert. Im Anschluß daran wurde zur Verhinderung einer möglichen Diffusion der Probe in das Puffergefäß eine geringe Menge Waschpuffer, ein sogenannter Pufferplug, unter denselben Bedingungen auf die Säule geladen.

Anschließend wurde die Probe durch das Aufbringen des Waschpuffers bei einer Spannung von -15 kV und unter Anlegen eines Druckes auf beide Enden der Säule von 10 bar gewaschen. Dabei wurden die Proteine und Salze aus der Modellmatrix entfernt. Nach 7,7 min wurde der Waschpuffer durch einen Elutionspuffer ersetzt. Die Bedingungen -15 kV und 10 bar wurden beibehalten. Das Diphenylsulfon eluierte bei 9,805 min und einer Fläche von 84 mAU*sec. Das Elektropherogramm dieser Trennung ist in Abbildung 8 dargestellt.

## Patentansprüche

1. Verwendung von Trägermaterial für die Kapillar-Elektrochromatographie, **dadurch gekennzeichnet, dass** das Trägermaterial auf der Grundlage von hydroxylgruppenhaltigen Basismaterial auf die inneren Oberflächen von porösen Partikeln beschränkte Umkehrphasen aufweist, und dass diese Umkehrphasen aus Fettsäureresten bestehen.

2. Kapillare für die Kapillar-Elektrochromatographie gefüllt mit einem Trägermaterial, **dadurch gekennzeichnet, dass** das in der Kapillare befindliche Trägermaterial auf der Grundlage von hydroxylgruppenhaltigen Basismaterial auf die inneren Oberflächen von porösen Partikeln beschränkte Umkehrphasen aufweist und diese Umkehrphasen aus Fettsäureresten bestehen.

## Claims

1. Use of a support material for capillary electrochromatography, **characterized in that** said support material has reverse phases restricted to the interior surfaces of porous particles on the basis of a base material containing hydroxy groups, and that said reverse phases consist of fatty acid residues.

2. A capillary for capillary electrochromatography filled with a support material, **characterized in that** the support material present in the capillary has reverse phases restricted to the interior surfaces of porous particles on the basis of a base material containing hydroxy groups, and that said reverse phases consist of fatty acid residues.

## Revendications

1. Utilisation d'un matériau de support pour l'électrochromatographie capillaire, **caractérisée en ce que** le matériau de support comporte, sur la base d'un matériau de base contenant des groupes hydroxyle, des phases reverses limitées aux surfaces intérieures de particules poreuses et **en ce que** ces phases reverses sont constituées de résidus d'acides gras.

2. Capillaire pour électrochromatographie capillaire, remplie d'un matériau de support, **caractérisée en ce que** le matériau de support, se trouvant dans la colonne capillaire, comporte, sur la base d'un matériau de base contenant des groupes hydroxyle, des phases reverses limitées aux surfaces intérieures de particules poreuses et ces phases reverses sont constituées de résidus d'acides gras.
